# EUROPEAN PATENT APPLICATION

(11) **EP 1 752 251 A2**
(43) Date of publication of application: **14.02.2007**
(21) Application number: 06380078.3
(22) Date of filing: 11.04.2006
(51) Int. Cl.: B23P 21/00, B25J 9/00

(54) **Arrangement of robots and device comprising the same**

(30) Priority: 18.04.2005 ES 200500921
(71) Applicant: Tecnologies Aplicades a Muntatges Electro-Mecanica, S.L.L., 08271 Artes (Barcelona) (ES)
(72) Inventor: Murt Coma, Joan, 08271 Artes (Barcelona) (ES)
(74) Representative: Durán Moya, Luis-Alfonso

(57) **Abstract**

An arrangement of robots characterised in that it comprises:
a) a rotary base,
b) a set of robots located on the rotary base, designed to support, position and orientate workpieces,
c) a set of working devices located around the rotary base.

## Description

This invention relates to an arrangement of robots.

This arrangement of robots applies especially to the field of rotary machines for the surface treatment of workpieces, although the said arrangement may be applied to other fields such as, for example, that the manufacture of precision parts, watchmaking or parts in many branches of industry.

For the purposes of this invention robot is understood to mean a programmable mechanical device capable of seizing the workpieces and locating them at any point in a defined space or volume with the workpiece in any orientation.

Arrangements of a plurality of robots in which each robot is associated with a workstation or head capable of carrying out an operation (for example polishing, sanding, buffing, boring) are known. The robots are located opposite working heads in a linear or circular arrangement, the robots being fixed and the workpiece passing from robot to robot. This has the disadvantage that for every working operation there are two unproductive periods of time comprising the operations of receiving the workpiece from the previous robot and depositing the piece in a transfer area once the working operation has been completed in order to make it available to the next robot. In addition to this the operation of transferring the workpiece from robot to robot is complicated and may give rise to problems with faults and/or lack of accuracy.

On the other hand, in the specific field of the surface treatment of workpieces rotary machines comprising a rotary head with a plurality of workpiece-holder units and a plurality of surface treatment stations located around the rotary table are known. The workpiece-holder units have associated motor means which allow limited orientation of the workpiece, normally through two rotations about two axes which are perpendicular to each other. These arrangements have various disadvantages. First of all the movement capability of the workpiece-holder units is restricted to orientation of the workpiece, which means that each surface treatment station has to be equipped with motor means for movement and/or rotation, which complicates the installation. Another consequence of the limitation of movements of the workpiece-holder units is that in order to be able to process different parts it is necessary to make adjustments to the installation, as a result of which it is not possible to alternate the treatment of separate parts in one production process. Furthermore these rotary machines require the presence of an operator or an independent robot to carry out the operations of placing the parts in the workpiece-holder units and removing them.

In order to overcome these disadvantages this invention comprises an arrangement comprising:
a) a rotary base, preferably of fundamentally circular shape,
b) a set of robots located on the rotary base, designed to support, position and orientate workpieces,
c) a set of workstations located around the rotary base.

Preferably the arrangement may also comprise
d) a reception area so that one of the said robots located opposite it can pick up a workpiece,
e) a delivery area so that one of the aforesaid robots located opposite it can put down a workpiece.

The control cabinets or main control device assemblies, which vary in number according to the application, may be located on the rotary base or off it.

For a better understanding drawings of an arrangement of robots according to this invention are appended by way of an explanatory and non-restrictive example.
Figure 1 shows a plan view of an arrangement of robots according to this invention.
Figure 2 is a view in elevation of an arrangement according to this invention in which two robots are illustrated.
Figure 3 is a view in elevation showing one robot and one workstation in an arrangement according to this invention.
Figure 4 is a plan view of another arrangement of robots according to this invention with the control cabinets containing the main sets of control devices located off the rotary base.
Figure 5 is a view in elevation of an arrangement according to this invention with the control cabinets located off the rotary base.

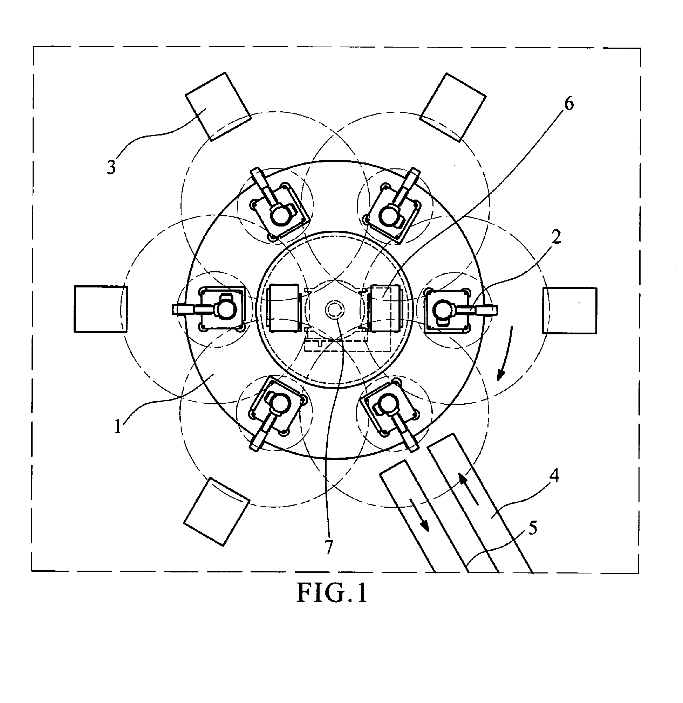

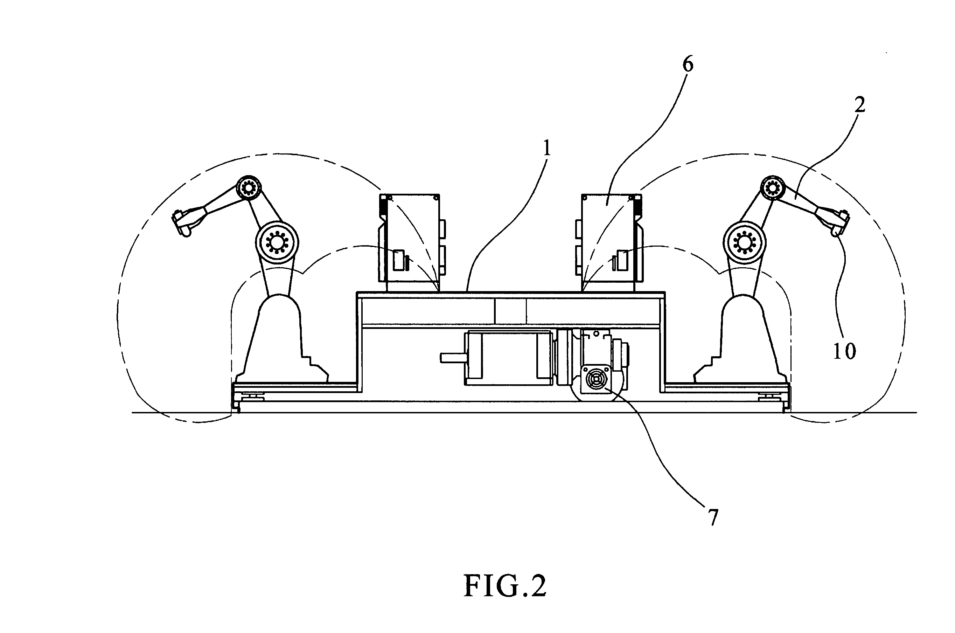

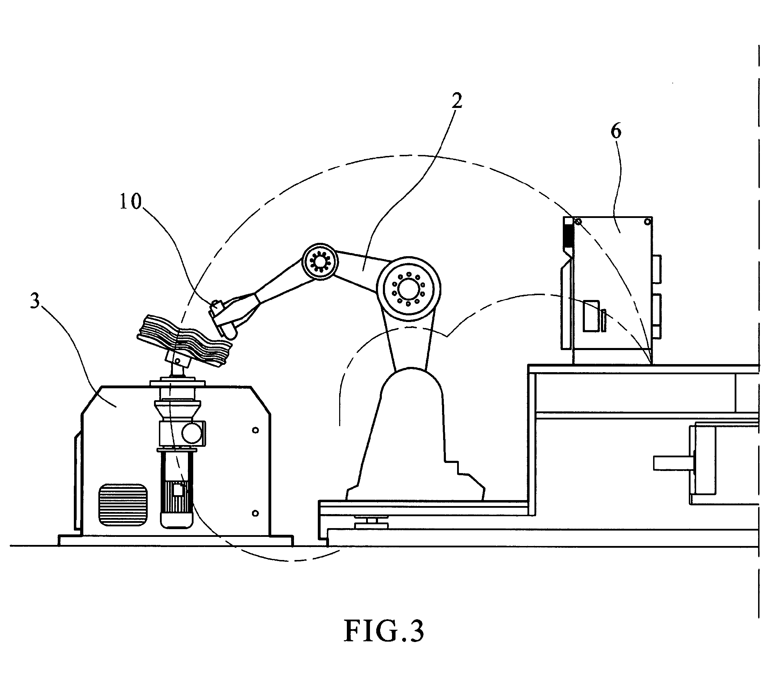

Figures 1 to 3 illustrate an embodiment of an arrangement of robots according to this invention, in particular an arrangement of robots applied to the surface treatment of workpieces -10-. The arrangement comprises a rotary base or table -1-, which rotates, driven for example through an indexing table -7-, of a commercially available type, or through any other appropriate means such as, for example, a toothed crown wheel and motor system. A set of robots -2- is mounted on base -1- and around base -1- there is a set of devices or workstations -3- such as, for example, polishing stations. The purpose of the robots is to locate and orientate workpieces -10- at workstations -3- so that in this case one or more faces of workpiece -10- undergo surface treatment. In order to do this robots -2- have six degrees of freedom, and can position workpieces -10- at any point and in any orientation within their working space. The working space is illustrated in the figures by dashed lines around the robots. The arrangement may be supplemented with an automatic delivery area -5- for processed parts or workpieces and another reception area -4- for parts to be processed. When in use a robot -2- located opposite reception area -4- picks up a workpiece -10- requiring processing from that area -4- and following the rotary movement of rotary base -1- passes successively through workstations -3-, during which robot -2- performs the necessary movements through its arm in order to locate and orientate workpiece -10- so that workstation -3- can perform the desired surface treatment on the desired surface of workpiece -10-. After passing through all workstations -3- robot -2- releases processed workpiece -10- in delivery area -5- and is in a position to pick up a new workpiece from reception area -4-.

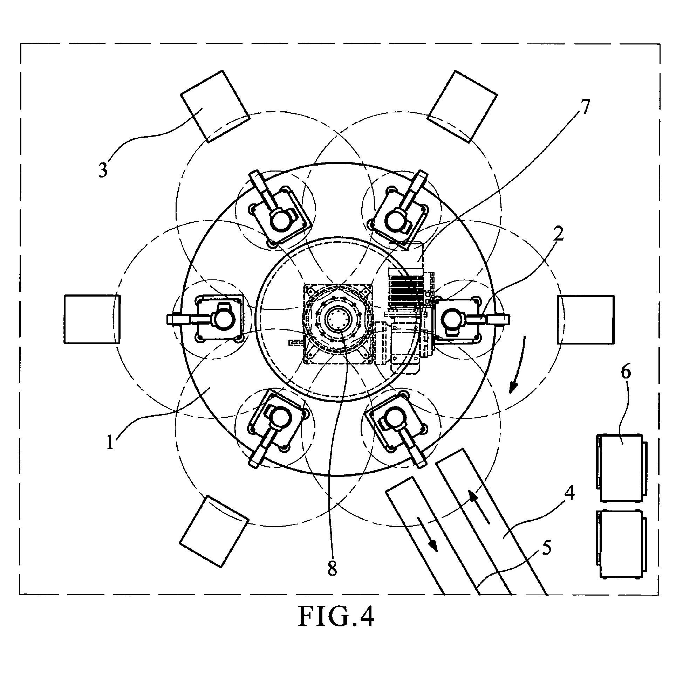

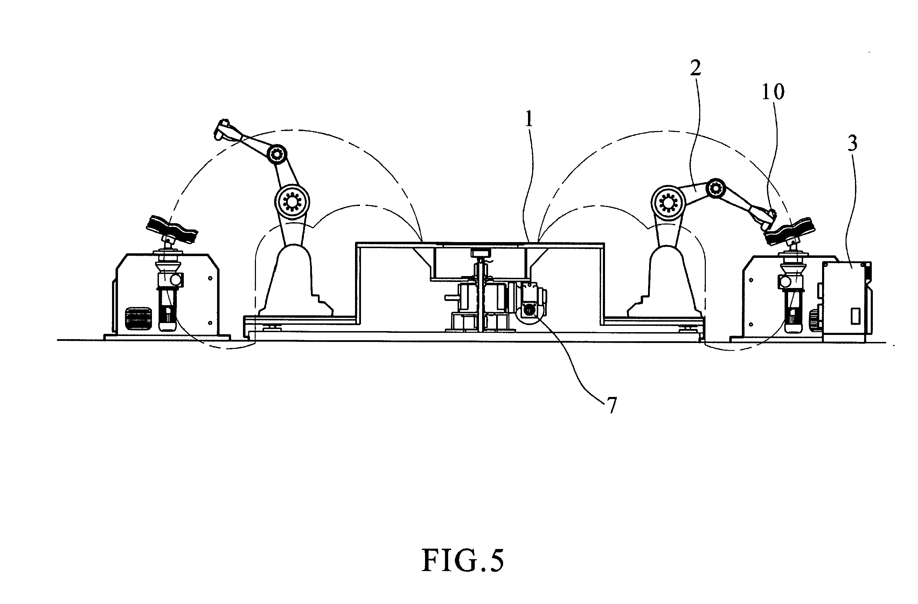

In the embodiment illustrated in Figures 1 to 3, control cabinets -6-, which in general will vary in number according to the class of application, are likewise located on rotary base -1-. By way of comparison Figures 4 and 5 illustrate an application wholly similar to that illustrated in Figures 1 to 3, except that control cabinets -6- in which the main sets of devices controlling the arrangement are located are positioned off rotary base -1-. For this purpose both control information and the power which has to be transmitted from the fixed control cabinets -6- to moving robots -2- is transmitted through a set of rotary connectors or joints of a type suitable for the transmission of signals in data communication through a communications protocol. One embodiment of these rotary connectors is marketed by the company Servotechnik GmbH.

In its application in the context of the surface treatment of workpieces the arrangement illustrated has a number of advantages in comparison with rotary table arrangements provided with workpiece-holder units which are able to rotate the workpiece about one or two axes. In the first place the robots permit a greater amount of movement than the arrangements mentioned. In addition to this construction is simplified, as it is not necessary to impart movement to the workstations. Furthermore, the arrangement according to this invention is more economical because it does not need an independent operator or robot to locate the workpieces in the workpiece-holder units. Finally, the arrangement of the robots also makes it possible to alternate different treatments on different workpieces in one production process with greater ease.

There are many variants of the embodiments illustrated which will be obvious to those skilled in the art without going beyond the scope of this invention.

## Claims

1. An arrangement of robots **characterised in that** it comprises:
a) a rotary base,
b) a set of robots located on the rotary base, designed to support, position and orientate workpieces,
c) a set of working devices located around the rotary base.

2. An arrangement according to claim 1, **characterised in that** it further comprises:
d) a reception area so that one of the said robots located opposite it can pick up a workpiece,
e) a delivery area so that one of the said robots located opposite it can put down an already processed workpiece.

3. A device according to claim 1 or 2, **characterised in that** the rotary base is of a fundamentally circular shape.

4. An arrangement according to any one of claims 1 to 3, **characterised in that** the main set or sets of devices controlling the robots are located on the rotary base.

5. An arrangement according to any one of claims 1 to 3, **characterised in that** the set or sets of devices controlling the robots are located off the rotary base.

6. A device according to claim 5, **characterised in that** the transmission of power to the robots from the set or sets of control devices takes place through a set of rotary connectors or joints suitable for the transmission of signals in data communication through a communications protocol through which power is transmitted to at least one of the said robots.

7. An arrangement according to any one of claims 1 to 6, **characterised in that** the robots are capable of locating a workpiece at any point in a defined space or working space, with the workpiece in any orientation.
